# EUROPEAN PATENT APPLICATION

(11) **EP 4 471 386 A1**
(43) Date of publication of application: **04.12.2024**
(21) Application number: 23743321.4
(22) Date of filing: 19.01.2023
(51) Int. Cl.: G01G 11/00, G01G 21/28

(54) **WEIGHT INSPECTION DEVICE**

(30) Priority: 24.01.2022 JP 2022008770; 24.01.2022 JP 2022008774
(71) Applicant: Ishida Co., Ltd., Kyoto-shi Kyoto 606-8392 (JP)
(72) Inventor: MIZUNO, Emi, Ritto-shi, Shiga 520-3026 (JP); SHIOTANI, Heinosuke, Ritto-shi, Shiga 520-3026 (JP)
(74) Representative: Global IP Europe Patentanwaltskanzlei
(86) International application number: PCT/JP2023/001545
(87) International publication number: WO 2023/140328

(57) **Abstract**

A weight inspection apparatus includes a conveyance weighing unit that measures a weight of an object to be inspected while conveying the object in a conveyance direction, and a frame that supports the conveyance weighing unit. The frame includes at least four support columns disposed at positions not overlapping with the conveyance weighing unit in plan view, and at least four beam portions forming a quadrangle in plan view, each of the beam portions being connected to any two of the support columns. The beam portions include a pair of first beam portions, each of the first beam portions being connected to two support columns arranged in the conveyance direction, and a height of an upper end of at least one of the first beam portions is equal to a height of a conveyance surface of the conveyance weighing unit or higher than the height of the conveyance surface.

## Description

### Technical Field

The present disclosure relates to a weight inspection apparatus.

### Background Art

There has been conventionally known a weight inspection apparatus that measures a weight of an object to be inspected while conveying the object and supplies the object to a subsequent apparatus. The weight inspection apparatus includes a take-in unit that takes in an object to be inspected, and a weighing unit that detects a weight of the object supplied from the take-in unit. The take-in unit and the weighing unit are supported by a frame. For example, as described in Patent Literature 1, the frame includes a pair of inverted U-shaped leg members disposed at a predetermined distance in a conveyance direction (X-axis direction in Patent Literature 1) and a pair of rail-shaped members fixed on the pair of leg members and extending in the conveyance direction. The rail-shaped member is fixed to a horizontal portion of the leg member by welding or the like. The rail-shaped member supports a weighing box of the weighing unit and a take-in box of the take-in unit.

In the apparatus of Patent Literature 1, a load cell which is a strain generation body is attached in the weighing box. A fixed end on one side of the load cell is fixed in the weighing box, and a free end on the other side of the load cell supports a weighing conveyor via a motor box housing a drive motor and a pair of support members. In the weighing unit, the weight of the weighing conveyor itself and the weight of the object are transmitted to the free end of the load cell via the support member, the motor box, and the like.

### Citation List

### Patent Literature

Patent Literature 1: Japanese Patent No. 5064973

### Summary of Invention

### Technical Problem

The frame structure of the conventional weight inspection apparatus has a problem of low rigidity. To perform stable measurement while securing rigidity, the weight of the apparatus increases, and thus it has been difficult to reduce the weight of the apparatus.

The present disclosure describes a weight inspection apparatus that enables weight reduction while increasing rigidity of a frame.

### Solution to Problem

A weight inspection apparatus according to an aspect of the present disclosure includes a conveyance weighing unit that measures a weight of an object to be inspected while conveying the object in a conveyance direction, and a frame that supports the conveyance weighing unit, wherein the frame includes at least four support columns disposed at positions not overlapping with the conveyance weighing unit in plan view, and at least four beam portions forming a quadrangle in plan view, each of the at least four beam portions being connected to any two of the support columns, and the beam portions include a pair of first beam portions, each of the pair of first beam portions being connected to two support columns arranged in the conveyance direction, and a height of an upper end of at least one of the first beam portions is equal to a height of a conveyance surface of the conveyance weighing unit or higher than the height of the conveyance surface.

According to this weight inspection apparatus, at least four beam portions are disposed to form a quadrangle in plan view, and each beam portion is connected to the support column. Thus, the rigidity of the frame is increased. Vibration may adversely affect the measurement of an object to be inspected. Since the rigidity of the frame is increased, the weight inspection apparatus is less likely to be affected by vibration. In addition, it is also easy to reduce the weight of all or a part of the four beam portions while securing rigidity. This makes it possible to reduce the weight of the frame.

The beam portions may include a pair of second beam portions connected to two support columns arranged in a width direction orthogonal to the conveyance direction, and the height of the second beam portions may be lower than the heights of the two support columns. In this case, the center of gravity of the frame is lowered, and thus stability is enhanced.

The conveyance weighing unit may be supported by the second beam portions. Since the conveyance weighing unit is supported at a lower position of the frame, the center of gravity of the entire weight inspection apparatus is lowered, and the stability is enhanced.

The second beam portions may be shorter than the first beam portions. Since the conveyance weighing unit is supported by the relatively short second beam portions, the frame can stably support the conveyance weighing unit. Resistance to vibration also improves.

The beam portions may include a pair of long-side beam portions forming long sides of the quadrangle and a pair of short-side beam portions forming short sides of the quadrangle, and the conveyance weighing unit may be supported by the short-side beam portions. Since the conveyance weighing unit is supported by the short-side beam portions, the frame can stably support the conveyance weighing unit. Resistance to vibration also improves.

The frame may include at least two second beam portions included in the beam portions, each of the at least two second beam portions being connected to two support columns arranged in a width direction orthogonal to the conveyance direction among the support columns, and a base member that is bridged between the at least two second beam portions and supports the conveyance weighing unit, wherein a base width that is a size in the width direction of the base member is equal to a lower end width that is a size in the width direction of a lower end of the conveyance weighing unit or larger than the lower end width. The second beam portions may be the short-side beam portions. The width direction may be a direction of the short side.

According to this weight inspection apparatus, the base portion having a base width equal to the lower end width or larger than the lower end width of the conveyance weighing unit is bridged over the second beam portions (or the short-side beam portions). Since the base portion supports the conveyance weighing unit, torsion is less likely to occur than in a conventional structure in which two conventional rail-shaped members are used. In addition, according to the base portion having a large base width, rigidity is also secured. As a result of realizing the prevention of torsion and the increase in rigidity, the weighing accuracy also improves.

### Advantageous Effects of Invention

According to the present disclosure, the rigidity of the frame is increased, and further, the weight of the frame can be reduced.

### Brief Description of Drawings

FIG. 1 is a front view of a weight inspection apparatus according to an embodiment.
FIG. 2 is a perspective view of the weight inspection apparatus of FIG. 1.
FIG. 3 is a side view (viewed from the upstream side) of the weight inspection apparatus of FIG. 1.
FIG. 4 is an enlarged front view illustrating the vicinity of a conveyance weighing unit.
FIG. 5 is a plan view of a frame and a conveyance weighing unit.
FIG. 6 is a perspective view illustrating a state in which an intake conveyor unit and a weighing conveyor unit are removed.
FIG. 7 is a perspective view of the frame.
FIG. 8(a) is a view illustrating a sensor attachment structure in a first beam, and FIG. 8(b) is a view of the attachment structure in FIG. 8(a) as viewed from below the first beam.
FIG. 9 is a front view illustrating a frame according to a modification and a conveyance weighing unit supported by the frame.
FIG. 10 is a plan view of the frame.
FIG. 11 is a sectional view of a base member.
FIG. 12 is a perspective view illustrating a weighing unit fixed to the base member.

### Description of Embodiments

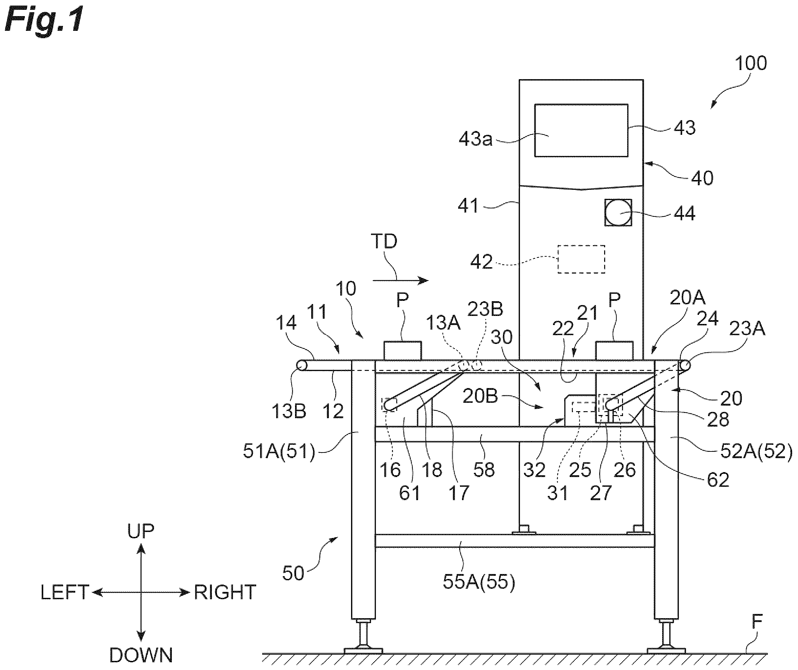

Hereinafter, a weight inspection apparatus 100 according to an embodiment will be described with reference to the drawings. In the description of the drawings, the same elements are denoted by the same reference numerals, and redundant description will be omitted. In the following description, the terms "upper" and "lower" correspond to up-down directions in vertical directions as illustrated in FIG. 1, and the terms "upstream" and "downstream" mean upstream and downstream in a conveyance direction TD of an object P to be inspected.

The weight inspection apparatus 100 is an apparatus that checks whether the weight of the object P is within an allowable range while conveying the object P supplied from the upstream side to the downstream side. As illustrated in FIG. 1, the weight inspection apparatus 100 mainly includes 1, a main body 40, and a frame 50.

A conveyance weighing unit 20 is attached to the frame 50 and includes an intake portion 10 disposed on the upstream side (left side in the drawing) and a weighing device 30 disposed on the downstream side (right side in the drawing).

The intake portion 10 of the conveyance weighing unit 20 receives and conveys the object P from the upstream side, and delivers the object P to the weighing device 30 on the downstream side. The intake portion 10 includes an intake conveyor (intake conveyor unit) 11 and a drive unit 15.

The intake conveyor 11 includes a conveyor frame 12, a driving roller 13A, a driven roller 13B, and a conveying belt 14. The conveyor frame 12 is supported by a pair of support members 61 disposed on the front side and the back side of the intake conveyor 11. The driving roller 13A and the driven roller 13B are rotatably attached to the upstream side and the downstream side of the conveyor frame 12 in the conveyance direction TD, respectively. The conveying belt 14 is an endless belt wound around the driving roller 13A and the driven roller 13B.

The drive unit 15 drives the intake conveyor 11. The drive unit 15 includes a drive motor 16 and a motor box 17. The drive motor 16 rotates the driving roller 13A. The motor box 17 houses the drive motor 16. The motor box 17 is fixed to a base member 58 (to be described in detail later) of the frame 50 via the support member 61. The motor box 17 may be directly fixed to the base member 58 of the frame 50. The drive motor 16 transmits driving force to the driving roller 13A via a timing belt 18 to rotate the driving roller 13A. This causes the conveying belt 14 to rotate between the driving roller 13A and the driven roller 13B, and the object P on the conveying belt 14 is conveyed to the conveyance weighing unit 20.

The weighing device 30 of the conveyance weighing unit 20 weighs the weight of the object P while conveying the object P delivered from the intake portion 10. The weighing device 30 includes a conveyance unit 20A and a weighing unit 20B. The conveyance unit 20A conveys the object P. The conveyance unit 20A includes a carrying conveyor 21 and a drive unit 25.

The conveyance direction TD of the carrying conveyor 21 is a horizontal direction in the present embodiment, and is the same as the conveyance direction TD of the intake conveyor 11. The carrying conveyor 21 includes a conveyor frame 22, a driving roller 23A and a driven roller 23B, and a conveying belt 24. The conveyor frame 22 is supported by a pair of support members 62 disposed on the front side and the back side of the conveyance weighing unit 20. The driving roller 23A and the driven roller 23B are rotatably attached to the upstream side and the downstream side of the conveyor frame 22 in the conveyance direction TD, respectively. The conveying belt 24 is an endless belt wound around the driving roller 23A and the driven roller 23B.

The drive unit 25 drives the carrying conveyor 21. The drive unit 25 includes a drive motor 26 and a motor box 27. The drive motor 26 rotates the driving roller 23A. The motor box 27 houses the drive motor 26. The motor box 27 is fixed to the base member 58 of the frame 50 via the support member 62. The motor box 27 may be directly fixed to the base member 58 of the frame 50. The drive motor 26 transmits driving force to the driving roller 23A via a timing belt 28 to rotate the driving roller 23A. This causes the conveying belt 24 to rotate between the driving roller 23A and the driven roller 23B, and the object P on the conveying belt 24 is conveyed to the downstream side.

The weighing unit 20B measures the weight of the object P on the conveyance unit 20A. The weighing unit 20B includes a load cell 31 and a weighing box 32. The load cell 31 detects a change in distortion caused by the object P being placed on the conveyance unit 20A, and it measures the weight of the object P placed on the conveyance unit 20A. The weighing box 32 is fixed to the base member 58 of the frame 50. The weighing box 32 houses the load cell 31.

The main body 40 is disposed behind the weighing device 30. The main body 40 includes a housing unit 41, a control unit 42, a display operation unit 43, and a power switch 44. The main body 40 is fixed to a lower beam portions 55 of the frame 50.

The housing unit 41 is a vertically long housing extending in the up-down direction. The control unit 42 is housed in the housing unit 41. The control unit 42 controls operation of each unit of the weight inspection apparatus 100. The control unit 42 includes, for example, a CPU, a ROM, a RAM, and the like. The control unit 42 receives a weighing signal output from the load cell 31 and determines whether the weighing value indicated by the weighing signal is within a predetermined allowable range.

The display operation unit 43 is provided in an upper portion of the housing unit 41. A screen 43a of the display operation unit 43 displays contents related to measurement performed by the weighing device 30. For example, a result of determination by the control unit 42 and the like are displayed on the screen 43a of the display operation unit 43. The power switch 44 turns on and off the power of the weight inspection apparatus 100.

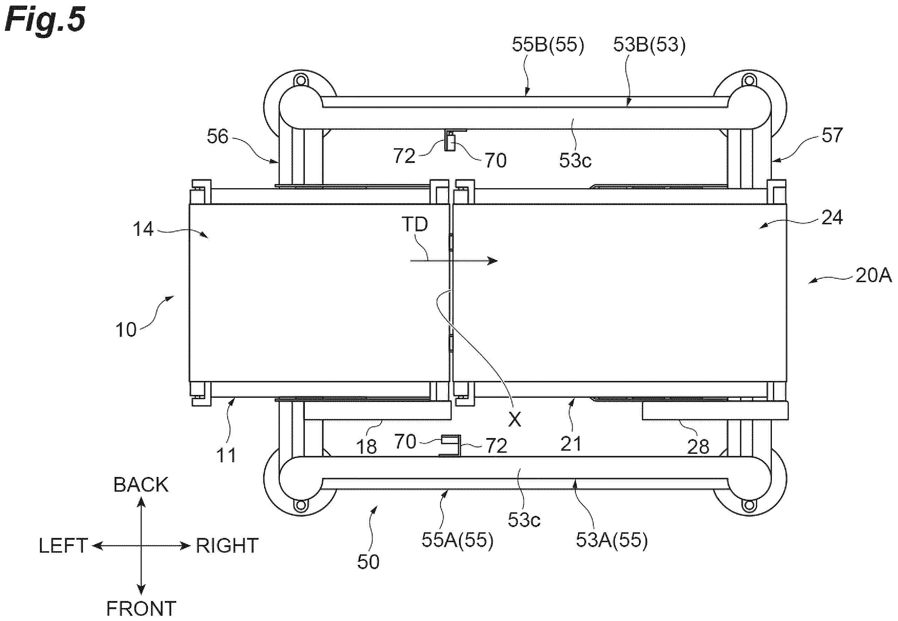

Next, with reference to FIGS. 1 to 5 and 7, the configuration of the frame 50 and the disposition relationship between each part of the frame 50 and each part of the conveyance weighing unit 20 will be described. As illustrated in FIGS. 1 to 3, the frame 50 supports the conveyance weighing unit 20. That is, the frame 50 supports both the intake portion 10 and the weighing device 30. The frame 50 includes four support columns 51 and 52 standing on an installation surface (ground) F of the weight inspection apparatus 100. The four support columns 51 and 52 extend straight in the up-down direction, for example, and are parallel to each other. Specifically, the frame 50 includes a pair of left support columns 51 disposed on the upstream side and a pair of right support columns 52 disposed on the downstream side. The pair of left support columns 51 is disposed so as to be separated from each other at a predetermined interval in a width direction (front-back direction) orthogonal to the conveyance direction TD. The pair of right support columns 52 is disposed so as to be separated from each other at a predetermined interval in the width direction (front-back direction) orthogonal to the conveyance direction TD. The four support columns 51 and 52 are disposed at positions of vertexes of a quadrangle in plan view. The interval between the pair of left support columns 51 and the interval between the pair of right support columns 52 are, for example, equal, and the conveyance weighing unit 20 is housed within the range of the interval in the front-back direction. As illustrated in FIG. 5, the four support columns 51 and 52 are disposed at positions not overlapping with the conveyance weighing unit 20 in plan view. The four support columns 51 and 52 are disposed around the conveyance weighing unit 20 (around in the horizontal direction). Each of the support columns 51 and 52 is formed of, for example, a circular tubular member made of metal.

In the following description, one of the pair of left support columns 51 disposed on the front side may be referred to as a left support column 51A, and one disposed on the back side may be referred to as a left support column 51B. One of the pair of right support columns 52 disposed on the front side may be referred to as a right support column 52A, and one disposed on the back side may be referred to as a right support column 52B. As described above, the left support column 51A, the left support column 51B, the right support column 52A, and the right support column 52B are parallel to each other, and extend, for example, in the up-down direction. In the present embodiment, the height (that is, the length) of each of the left support column 51A, the left support column 51B, the right support column 52A, and the right support column 52B is equal with respect to the installation surface F.

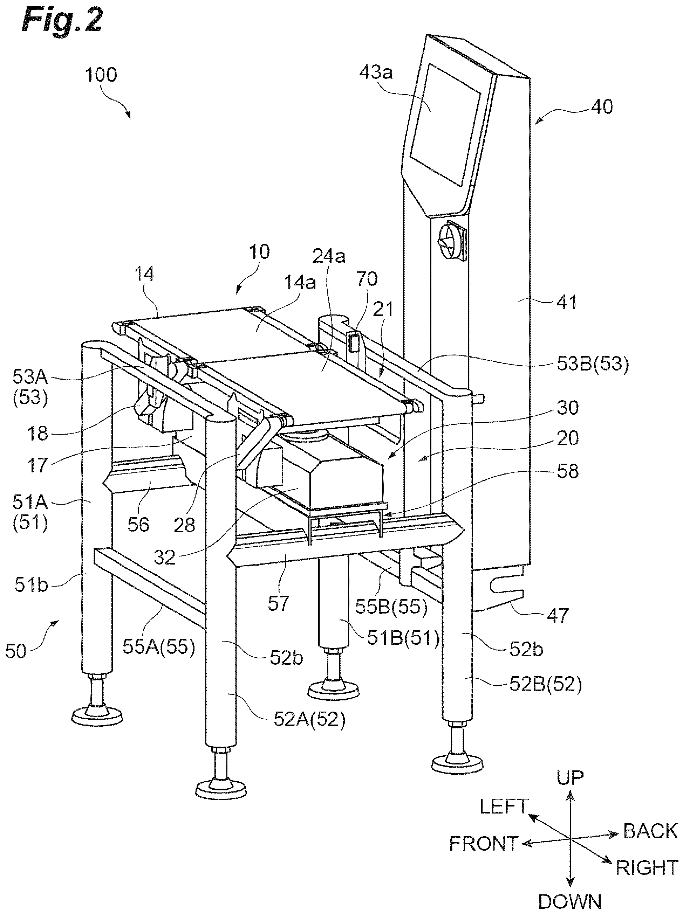

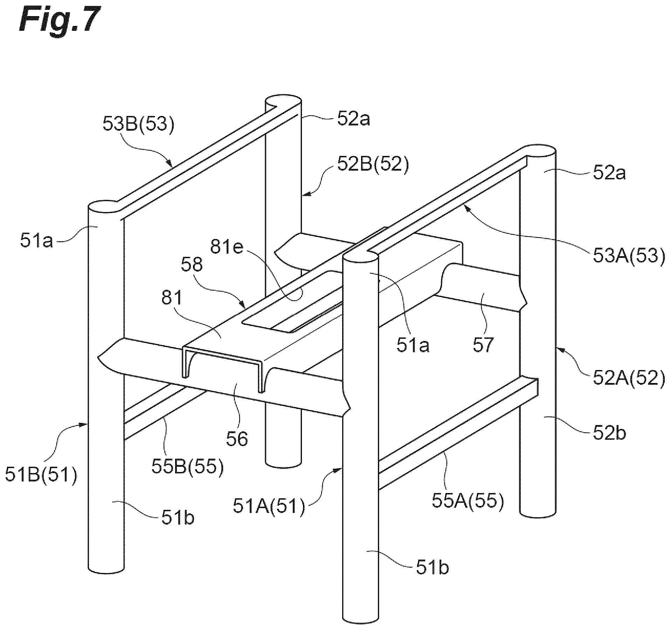

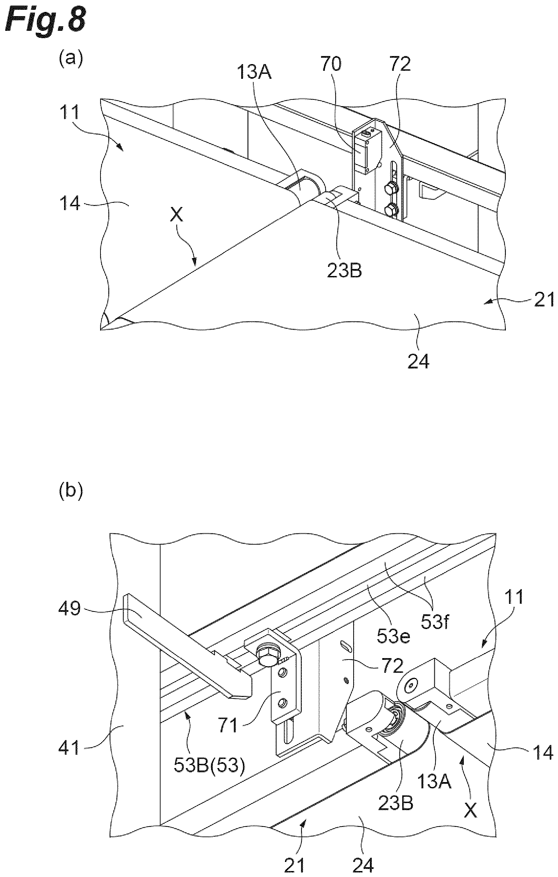

The frame 50 includes a pair of upper beam portions (first beam portions) 53 and a pair of lower beam portions 55 connected to the left support column 51 and the right support column 52 arranged in the conveyance direction TD. As illustrated in FIGS. 2 and 7, the upper beam portion 53 is connected to, for example, an upper end portion 51a of the left support column 51 and an upper end portion 52a of the right support column 52. The lower beam portion 55 is connected to, for example, a lower portion 51b of the left support column 51 and a lower portion 52b of the right support column 52. Each of the upper beam portions 53 and the lower beam portion 55 is formed of, for example, a square tubular member made of metal. Both or one of the upper beam portions 53 and the lower beam portion 55 may be a member having a C-shaped section opened downward. On the lower surface of the upper beam portion 53, for example, an opening 53e extending in a longitudinal direction and a pair of lower surface pieces 53f forming the opening 53e are formed (see FIG. 8(b)).

In the following description, one of the pair of upper beam portions 53 disposed on the front side may be referred to as an upper beam portion 53A, and one disposed on the back side may be referred to as an upper beam portion 53B. One of the pair of lower beam portions 55 disposed on the front side may be referred to as a lower beam portion 55A, and one disposed on the back side may be referred to as a lower beam portion 55B. One upper beam portion 53A and one lower beam portion 55A are fixed to the left support column 51A and the right support column 52A arranged in the conveyance direction TD. One upper beam portion 53B and one lower beam portion 55B are fixed to the left support column 51B and the right support column 52B arranged in the conveyance direction TD. The housing unit 41 of the main body 40 described above is attached to the lower beam portion 55B via a bracket 47. The upper beam portion 53A, the upper beam portion 53B, the lower beam portion 55A, and the lower beam portion 55B are parallel to each other and extend, for example, in the horizontal direction. Lengths of the upper beam portion 53A, the upper beam portion 53B, the lower beam portion 55A, and the lower beam portion 55B are equal to each other.

The frame 50 includes one left horizontal beam portion (second beam portion) 56 connected to the pair of left support columns 51 arranged in the width direction (front-back direction) and one right horizontal beam portion (second beam portion) 57 connected to the pair of right support columns 52 arranged in the width direction (front-back direction). The left horizontal beam portion 56 and the right horizontal beam portion 57 are fixed to the center portions of the left support column 51 and the right support column 52 in the up-down direction. Both the left horizontal beam portion 56 and the right horizontal beam portion 57 extend horizontally and are located at a height between the upper beam portion 53 and the lower beam portion 55. The height of the left horizontal beam portion 56 is lower than the height of the left support column 51A and lower than the height of the left support column 51B. The height of the right horizontal beam portion 57 is lower than the height of the right support column 52A and lower than the height of the right support column 52B. Each of the left horizontal beam portion 56 and the right horizontal beam portion 57 is formed of, for example, a circular tubular member made of metal. The left horizontal beam portion 56 and the right horizontal beam portion 57 are parallel to each other and extend, for example, in the horizontal direction. The length of the left horizontal beam portion 56 is equal to the length of the right horizontal beam portion 57. The height of the left horizontal beam portion 56 is equal to the height of the right horizontal beam portion 57.

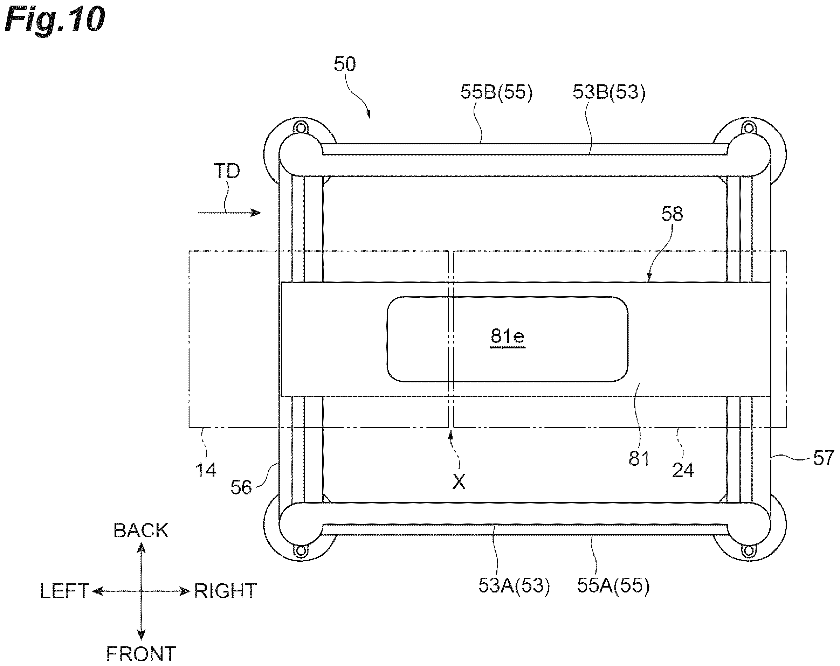

The frame 50 further includes the base member 58 bridged between the left horizontal beam portion 56 and the right horizontal beam portion 57. The base member 58 extends horizontally, for example. The base member 58 extends, for example, parallel to the installation surface F. The base member 58 is formed of, for example, a metal member having a C-shaped section opened downward. The base member 58 includes a flat top surface plate portion 81. The motor box 17 of the drive unit 15, the motor box 27 of the drive unit 25, and the weighing box 32 are fixed on the top surface plate portion 81 of the base member 58 using appropriate fastening members (bolt, nut, screw, or the like). The top surface plate portion 81 is an attachment surface or an installation surface for attaching the conveyance weighing unit 20 to the frame 50. A rectangular opening 81e having an area of about 1/2 to 1/4 of the top surface plate portion 81 is formed in a central region of the top surface plate portion 81 (see also FIG. 10).

The upper beam portions 53, the lower beam portions 55, the left horizontal beam portion 56, and the right horizontal beam portion 57 are connected to the support columns 51 and 52 by welding, for example. The base member 58 is connected to the left horizontal beam portion 56 and the right horizontal beam portion 57 by welding, for example. These connection forms are not limited to welding, and may be, for example, bonding or the like, or a fixing metal fitting or the like and a fastening member may be applied.

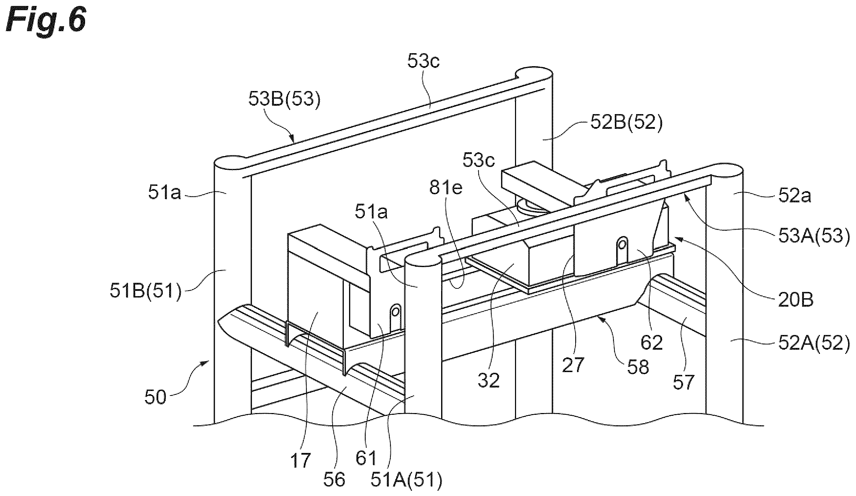

As illustrated in FIG. 5, in the frame 50, the two upper beam portions 53 (the upper beam portion 53A and the upper beam portion 53B), the left horizontal beam portion 56, and the right horizontal beam portion 57 form a quadrangle in plan view. In plan view, the conveyance weighing unit 20 is disposed in the quadrangle (within a range) formed by the two upper beam portions 53, the left horizontal beam portion 56, and the right horizontal beam portion 57. More specifically, as illustrated in FIG. 6, in plan view, the motor box 17, the motor box 27, and the weighing box 32 are disposed in the quadrangle (within a range) formed by the two upper beam portions 53, the left horizontal beam portion 56, and the right horizontal beam portion 57.

More specifically, in the frame 50, both the left horizontal beam portion 56 and the right horizontal beam portion 57 are shorter than the upper beam portion 53. That is, the quadrangle formed by a frame-shaped beam portion including the four (four sides) of the pair of upper beam portions 53, the left horizontal beam portion 56, and the right horizontal beam portion 57 is a rectangle. The pair of upper beam portions 53 is a pair of long-side beam portions forming long sides of the rectangle. The left horizontal beam portion 56 and the right horizontal beam portion 57 are a pair of short-side beam parts forming short sides of the rectangle. The width direction is a direction in which the short-side beam portion extends, and corresponds to a "short-side direction" described in the claims.

As illustrated in FIGS. 1 to 4, the conveyance weighing unit 20 is supported by the base member 58. That is, the intake portion 10 and the weighing device 30 are supported by the base member 58. In other words, the conveyance weighing unit 20 is supported by the left horizontal beam portion 56 and the right horizontal beam portion 57 via the base member 58.

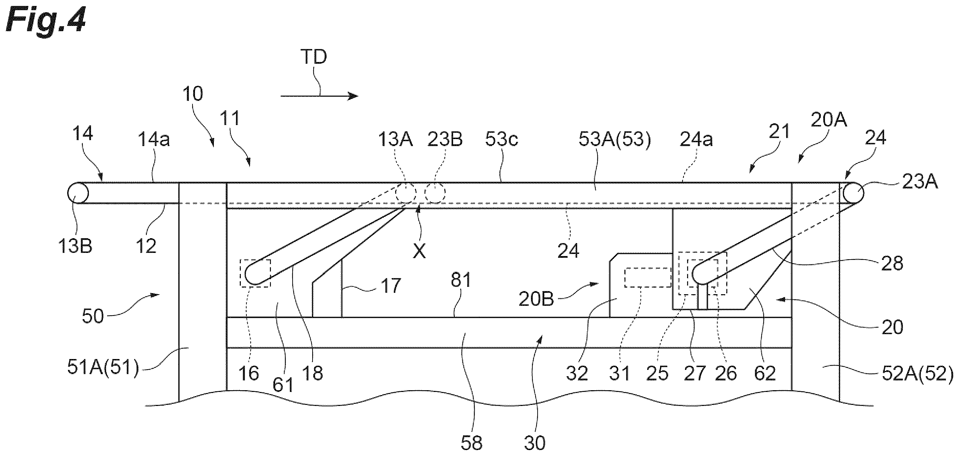

As illustrated in FIGS. 1 and 4, a conveyance surface 14a of the conveying belt 14 of the intake conveyor 11 and a conveyance surface 24a of the conveying belt 24 of the carrying conveyor 21 are located at the same height. In other words, the conveyance surface 14a and the conveyance surface 24a are located on the same plane. The object P is delivered from the conveyance surface 14a to the conveyance surface 24a, and a gap portion X having a minute width (length in the conveyance direction TD) is formed between the intake conveyor 11 and the carrying conveyor 21.

The height of the upper beam portion 53A connected to the upper end portion 51a of the left support column 51A and the upper end portion 52a of the right support column 52A is equal to the height of the upper beam portion 53B connected to the upper end portion 51a of left support column 51B and the upper end portion 52a of the right support column 52B. In the present embodiment, the heights of the upper beam portion 53A and the upper beam portion 53B are the same as the heights of the conveyance surface 14a and the conveyance surface 24a. That is, when the installation surface F is assumed to be a flat plane, the distance from the installation surface F to upper end surfaces (upper ends) 53c of the upper beam portion 53A and the upper beam portion 53B is equal to the distance from the installation surface F to the conveyance surface 14a and the conveyance surface 24a. The upper end surfaces 53c of the upper beam portion 53A and the upper beam portion 53B are flush with the upper end surfaces of the two left support columns 51 and the two right support columns 52.

In the frame 50, four support columns, that is, the left support columns 51 and the right support columns 52 are provided so as to surround the conveyance weighing unit 20. As illustrated in FIG. 5, the conveyance weighing unit 20 is disposed between the right support column 52A and the upper beam portion 53B in the front-back direction. In plan view, the conveyance weighing unit 20 is disposed between the left horizontal beam portion 56 and the right horizontal beam portion 57 in the left-right direction (conveyance direction TD).

As illustrated in FIG. 2, the upper beam portion 53A and the upper beam portion 53B are disposed on the side of the conveying belt 14 and the conveying belt 24. With this disposition, the upper beam portion 53A and the upper beam portion 53B, which are parts of the frame 50, serve as protection members for the intake conveyor 11 and the carrying conveyor 21. Conventionally, in a configuration in which the frame 50 is disposed below the conveyance weighing unit 20, a support arm extending in the front-back direction and the up-down direction is attached to a leg member having an inverted U shape, and a bumper member is provided at an upper end of the support arm. The bumper member extending in the conveyance direction plays a role of protecting the conveyance unit of the conveyance weighing unit. In the weight inspection apparatus 100 of the present embodiment, the upper beam portions 53 provided so as to bridge the upper ends (or upper portions) of the two support columns arranged in the conveyance direction TD protects the conveyance unit 20A (the carrying conveyor 21) of the conveyance weighing unit 20. A separate member such as the conventional support arm described above is unnecessary, and a part of the frame 50 has a bumper function.

As illustrated in FIGS. 8(a) and 8(b), for example, an electric system component or member can be attached to the upper beam portions 53. As an example, a photoelectric sensor 70 may be attached to the upper beam portion 53B. A fixture 71 is fixed to the pair of lower surface pieces 53f through the opening 53e of the upper beam portion 53B, and the photoelectric sensor 70 is fixed to a holder 72 integrated with the fixture 71. The photoelectric sensor 70 is disposed in the vicinity of the gap portion X between the intake conveyor 11 and the carrying conveyor 21, and detects the object P delivered from the intake conveyor 11 to the carrying conveyor 21. In addition to the photoelectric sensor 70, various devices can be attached to the upper beam portions 53. For example, an emergency stop switch that can be operated by an operator may be provided. In consideration of operability, such an operation device is attached to the upper beam portion 53A on the front side of the pair of upper beam portions 53.

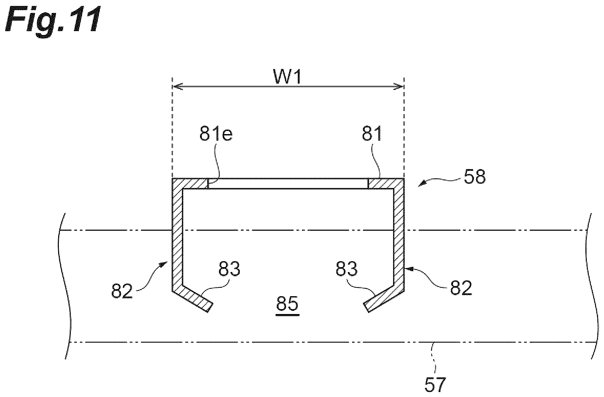

As illustrated in FIGS. 10 and 11, the base member 58 includes the top surface plate portion 81 forming an installation surface on which the conveyance weighing unit 20 is installed, and a pair of side surface plate portions 82 connected to both ends of the top surface plate portion 81 in the width direction. Further, a lower surface between lower ends of the pair of side surface plate portions 82 is open, and an open portion 85 is formed. The height of the open portion 85 may be located, for example, within the range of the diameter of the right horizontal beam portion 57 (and the left horizontal beam portion 56). A pair of bent plate portions 83 bent in the width direction (front-back direction) is formed at the lower end of the side surface plate portion 82.

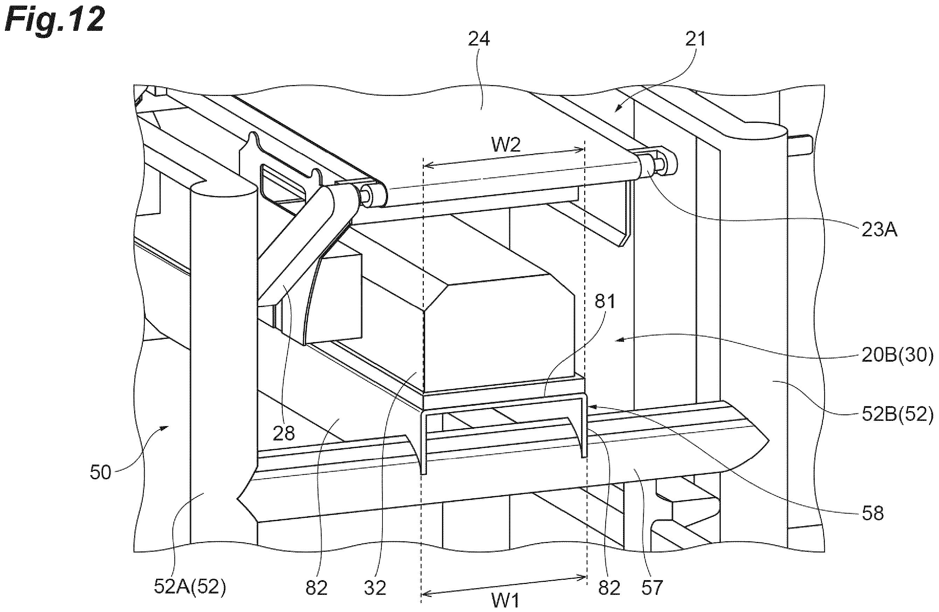

In the weight inspection apparatus 100, as illustrated in FIG. 12, a base width W1 which is a size in the width direction of the base member 58 is larger than a lower end width W2 which is a size in the width direction of the weighing box 32 constituting the lower end of the conveyance weighing unit 20. The base width W1 may be equal to the lower end width W2. "The base width W1 is equal to the lower end width W2" includes a case where the base width W1 is the same as the lower end width W2, but also includes a case where the base width W1 is different from the lower end width W2, but the difference between them is very small. "The base width W1 is equal to the lower end width W2" has the same meaning as that the base width W1 is substantially equal to the lower end width W2. In such a case, the difference between the base width W1 and the lower end width W2 is less than 5% with respect to the lower end width W2. The base width W1 may be slightly smaller than the lower end width W2.

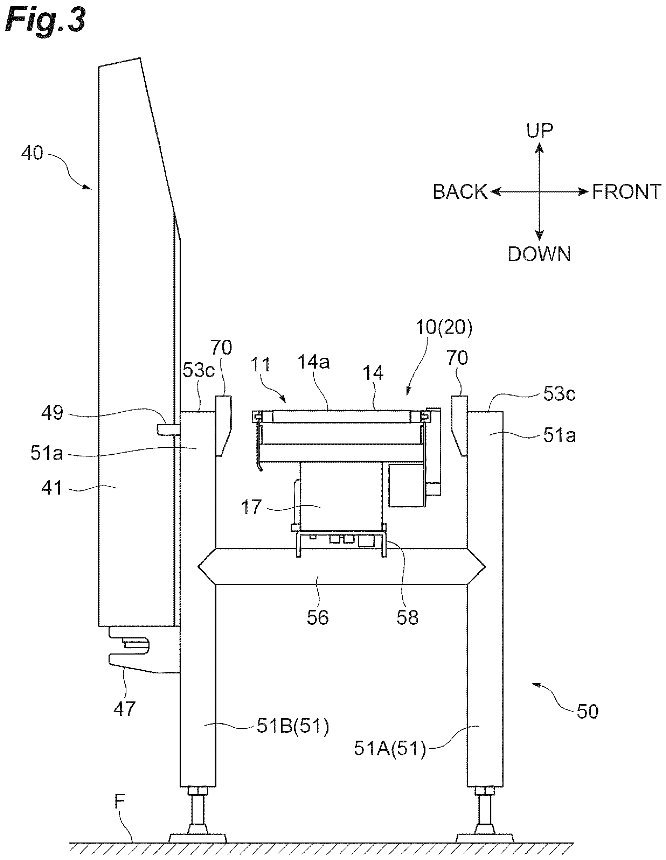

In the base member 58, the base width W1 is constant. The base width W1 of the base member 58 and a lower end width that is the size in the width direction of the motor box 17, which is the size in the width direction of the weighing box 32 constituting the lower end of the conveyance weighing unit 20, also have the same magnitude relationship as described above (see FIG. 3).

According to the weight inspection apparatus 100 of the present embodiment, at least the four beam portions 53,56, and 57 are disposed so as to form a quadrangle in plan view, and each of the beam portions 53, 56, and 57 is connected to the support columns 51 and 52. Thus, the rigidity of the frame 50 is increased. Vibration may adversely affect the measurement of the object P. Since the rigidity of the frame 50 is increased, the weight inspection apparatus 100 is less likely to be affected by vibration. In addition, it is also easy to reduce the weight of all or a part of the four beam portions 53, 56, and 57 while securing rigidity. This makes it possible to reduce the weight of the frame 50. When it is necessary to separately provide a separate bumper portion as in the conventional case, the bumper portion interrupts weight reduction. In the weight inspection apparatus 100 of the present embodiment, since the frame 50 also serves as a bumper portion, weight reduction is realized. Also from the viewpoint of rigidity, it is difficult to twist (resistant to external force in a twisting direction). Devices can be attached to the upper beam portions 53 disposed at a high position, and operability for the operator is also improved.

The heights of the left horizontal beam portion 56 and the right horizontal beam portion 57 are lower than the heights of the support columns 51 and 52. This configuration lowers the center of gravity of the frame 50, which enhances stability.

The conveyance weighing unit 20 is supported by the left horizontal beam portion 56 and the right horizontal beam portion 57. Since the conveyance weighing unit 20 is supported at a lower position of the frame 50, the center of gravity of the entire weight inspection apparatus 100 is lowered, and the stability is enhanced.

In addition, since the conveyance weighing unit 20 is supported by the left horizontal beam portion 56 and the right horizontal beam portion 57 constituting short sides of the rectangle, the frame 50 can stably support the conveyance weighing unit 20. Further, resistance to vibration improves.

From another viewpoint, since the conveyance weighing unit 20 is supported by the left horizontal beam portion 56 and the right horizontal beam portion 57 which are the short-side beam portions, the frame 50 can stably support the conveyance weighing unit 20. Further, resistance to vibration improves.

Another problem inherent in the conventional weight inspection apparatus will be described. In the frame structure of the conventional weight inspection apparatus, the pair of leg members is connected by two rail-shaped members, and thus there has been a problem that torsion is likely to occur in the frame. A structure in which torsion is likely to occur may cause a decrease in rigidity of the frame and a decrease in weighing accuracy.

According to the weight inspection apparatus 100 of the present embodiment, the base member 58 having the base width W1 equal to the lower end width W2 or larger than the lower end width W2 of the conveyance weighing unit 20 is bridged between the left horizontal beam portion 56 and the right horizontal beam portion 57. Since the base member 58 supports the conveyance weighing unit 20, torsion is less likely to occur than in a conventional structure in which two rail-shaped members are used. In addition, according to the base member 58 having a large base width W1, rigidity is also secured. As a result of realizing the prevention of torsion and the increase in rigidity, the weighing accuracy also improves.

The base member 58 includes the top surface plate portion 81 forming an installation surface on which the conveyance weighing unit 20 is installed, and a pair of side surface plate portions 82 connected to both ends of the top surface plate portion 81 in the width direction. A lower surface between lower ends of the side surface plate portions 82 is open. With this configuration, when the frame 50 is cleaned with water, water is less likely to accumulate in the base member 58. Since it is excellent in drainage performance (drainage), it is easy to maintain a dry state.

The bent plate portion 83 bent inward in the width direction is formed at a lower end of the side surface plate portion 82. The base member 58 is not only excellent in drainage performance at the time of cleaning, but also the strength of the base member 58 is further increased by the bent plate portion 83.

The top surface plate portion 81 is provided with the opening 81e that overlaps a position below the gap portion X in the conveyance direction TD. When the frame 50 is cleaned with water, water drops from between the motor box 17 provided below the intake conveyor 11 and the motor box 27 provided below the carrying conveyor 21, but the water can be quickly discharged (dropped) without being retained by the base member 58. In addition, accumulation of dust on the base member 58 can also be reduced.

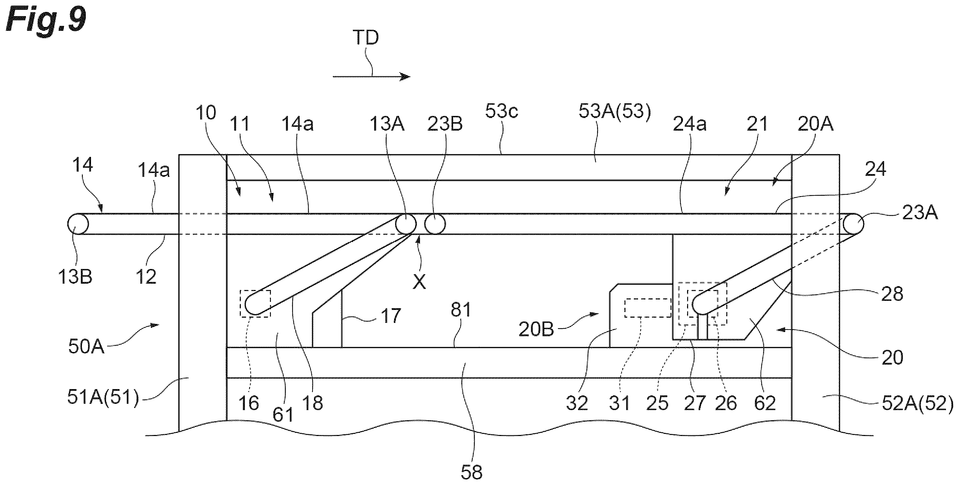

Although the embodiments of the present disclosure have been described above, the present invention is not limited to the above embodiments. For example, in the above embodiment, the case where the heights of the upper beam portion 53A and the upper beam portion 53B are the same as the heights of the conveyance surface 14a and the conveyance surface 24a has been exemplified, but the present invention is not limited to this example. As illustrated in FIG. 9, a frame 50A in which the heights of the upper beam portion 53A and the upper beam portion 53B are higher than the heights of the conveyance surface 14a and the conveyance surface 24a may be adopted.

In the above embodiment, the case where the first beam portion is longer than the second beam portion has been exemplified. That is, the case where the first beam portion is the long-side beam portion and the second beam portion is the short-side beam portion has been exemplified, but the present invention is not limited to this example. The second beam portion may be longer than the first beam portion. That is, the second beam portion may be the long-side beam portion, and the first beam portion may be the short-side beam portion. In such a case, the conveyance weighing unit may be supported by the second beam portion, but it does not have to be supported by the second beam portion. The conveyance weighing unit may be supported by the first beam portion as the short-side beam portion. An appropriate bracket is fixed to the first beam portion, and the conveyance weighing unit is supported by the bracket. The bracket may be provided at a position lower than the upper end of the first beam portion and fixed to the lower portion or the lower surface of the conveyance weighing unit.

The height of the second beam portion may be the same as the height of the support column or higher than the height of the support column. In such a case, the second beam portion may be disposed at a position that does not interfere with the conveyance weighing unit so as not to interrupt the function of the conveyance weighing unit.

The height of the upper beam portion 53A and the height of the upper beam portion 53B may be different. In such a case, the height of the upper end of only one of the pair of upper beam portions 53 may be the same as the height of the conveyance surface 24a of the conveyance weighing unit 20 or may be higher than the height of the conveyance surface 24a. The other upper end of the pair of first beam portions may be lower than the height of the conveyance surface 24a of the conveyance weighing unit 20. That is, the height of the upper end of at least one of the upper beam portions 53 may be equal to the height of the conveyance surface 24a of the conveyance weighing unit 20 or higher than the height.

Various modified modes may be adopted for the configuration of the conveyance weighing unit. For example, a configuration in which a weighing box is incorporated in the conveyance unit may be adopted.

The gap portion X may be omitted. The pair of bent plate portions 83 may be omitted. As the base member 58, a mode having various sections may be adopted, but the base width W1 of the base member 58 has the above-described relationship with respect to the lower end width W2 of the conveyance weighing unit 20.

Various modified modes may be adopted for the configuration of the conveyance weighing unit. For example, a configuration in which a weighing box is incorporated in the conveyance unit may be adopted. In such a case as well, the base width W1, which is the size in the width direction of the base member 58, is equal to the lower end width W2, which is the size in the width direction of the lower end of the conveyance weighing unit 20, or larger than the lower end width W2.

The intake portion 10 may be omitted. In such a case, the frame 50 may support only the weighing device 30. In the frame 50, the lower beam portions 55 may be omitted.

The quadrangle formed by the four beam portions in plan view may be a square.

### Reference Signs List

10 intake portion
11 intake conveyor (intake conveyor unit)
20 conveyance weighing unit
20B weighing unit
21 carrying conveyor (weighing conveyor unit)
50 frame
51, 51A, 51B left support column
52, 52A, 52B right support column
53, 53A, 53B upper beam portion (first beam portion)
55, 55A, 55B lower beam portion
56 left horizontal beam portion (second beam portion, short-side beam portion)
57 right horizontal beam portion (second beam portion, short-side beam portion)
58 base member
81 top surface plate portion
82 side surface plate portion
83 bent plate portion
F installation surface
TD conveyance direction
P object to be inspected
W1 base width
W2 lower end width
X gap portion

## Claims

1. A weight inspection apparatus comprising:
a conveyance weighing unit configured to measure a weight of an object to be inspected while conveying the object in a conveyance direction; and
a frame configured to support the conveyance weighing unit,
wherein
the frame includes:
at least four support columns configured to be disposed at positions not overlapping with the conveyance weighing unit in plan view; and
at least four beam portions configured to form a quadrangle in plan view, each of the at least four beam portions being configured to be connected to any two of the support columns, and
the beam portions include a pair of first beam portions, each of the pair of first beam portions being configured to be connected to two support columns arranged in the conveyance direction, and a height of an upper end of at least one of the first beam portions being configured to be equal to a height of a conveyance surface of the conveyance weighing unit or higher than the height of the conveyance surface.

2. The weight inspection apparatus according to claim 1, wherein
the beam portions include a pair of second beam portions, each of the pair of second beam portions being configured to be connected to two support columns arranged in a width direction orthogonal to the conveyance direction, and a height of the second beam portions being configured to be lower than a height of the two support columns.

3. The weight inspection apparatus according to claim 2, wherein the conveyance weighing unit is configured to be supported by the second beam portions.

4. The weight inspection apparatus according to claim 3, wherein the second beam portions are shorter than the first beam portions.

5. The weight inspection apparatus according to claim 1 or 2, wherein
the beam portions include a pair of long-side beam portions forming long sides of the quadrangle and a pair of short-side beam portions forming short sides of the quadrangle, and
the conveyance weighing unit is configured to be supported by the short-side beam portions.

6. The weight inspection apparatus according to any one of claims 1 and 3 to 4, wherein
the frame includes:
at least two second beam portions included in the beam portions, each of the at least two second beam portions being configured to be connected to two support columns arranged in a width direction orthogonal to the conveyance direction among the support columns; and
a base member configured to be bridged between the at least two second beam portions and support the conveyance weighing unit, and
a base width that is a size in the width direction of the base member is equal to or larger than a lower end width that is a size in the width direction of a lower end of the conveyance weighing unit.

7. The weight inspection apparatus according to claim 2, wherein
the frame includes a base member configured to be bridged between the pair of second beam portions and support the conveyance weighing unit, and
a base width that is a size in the width direction of the base member is equal to or larger than a lower end width that is a size in the width direction of a lower end of the conveyance weighing unit.

8. The weight inspection apparatus according to claim 5, wherein
the frame includes a base member configured to be bridged between the pair of short-side beam portions and supports the conveyance weighing unit, and
a base width that is a size of the base member in a direction of the short sides is equal to or larger than a lower end width that is a size of a lower end of the conveyance weighing unit in a direction of the short sides .
